Europäisches Patentamt

**European Patent Office**

**Office européen des brevets**

(11) Publication number: **0 022 427**
**A1**

(12) **EUROPEAN PATENT APPLICATION**

(21) Application number: **80830046.1**

(22) Date of filing: **07.07.80**

(51) Int. Cl.³: **A 01 D 45/16**

(30) Priority: **09.07.79 IT 4969479**

(43) Date of publication of application:
**14.01.81 Bulletin 81/2**

(84) Designated Contracting States:
**AT BE CH DE FR GB LI NL SE**

(71) Applicant: **COSTRUZIONI MECCANICHE ANGELANE F.LLI CAMPELLI Soc.n.c.**
**Zona Industriale**
**06088 S.Maria Degli Angeli (Perugia)(IT)**

(72) Inventor: **Campelli, Pietro-**
**Zona Industriale**
**I-06088 S.Maria Degli Angeli (Perugia)(IT)**

(74) Representative: **Mascioli, Alessandro, Prof.Dr. c/o**
**A.N.D.I. Associazione Nazionale degli Inventori**
**Via Lima, 35**
**Roma(IT)**

(54) **A self-moving engine with hydrostatic advancement for the semi-automatic harvest of tobacco.**

㊾ The engine is particularly used for what concerns the use thereof on small fields or areas, wherein said engine consists in a self-moving waggon (2), eventually a track, with a hydrostatic advancement, provided with a plurality of conveyor belts (5) with a variable inclination, said belts (5) being in turn provided, at the end thereof, with seats (9) being surmounted by a working plane (3) and carrying an elevator so as to perform the loading and unloading of the finished product.

EP 0 022 427 A1

./...

Croydon Printing Company Ltd.

FIG 1

FIG 2

## A self-moving engine with hydrostatic advancement for the semi-automatic harvest of tobacco.

The present invention concerns a self-moving engine with hydrostatic advancement for the semi-automatic harvest of tobacco.

It is already well known that actually, in Italy and in all those Countries, where the cultivation of tobacco is limited to small fields, the harvesting of the product is performed nearly completely by hand by workmen who, due to the hard work, produce a yield which is not satisfactory when related to the market requests.

Furthermore, in those Countries where said cultivation is performed on large areas, completely automatic engines are used for the harvesting, provided with arms moved in alternate motion, causing the detachment of the leaves from the plants, making the same fall down onto a conveyor belt, said belt being placed centrally between said arms, whereby said belt provides the harvesting. Said automatic engines proved, however, to be extremely costly, to deteriorate to a high percentage the harvest product and to be clearly not suited and not economic, particularly for what concerns the use thereof on small fields or areas.

It is the purpose of the present invention to rea= lize a self-moving engine with a hydrostatic ad = vancement for the harvesting of the tobacco leav= es from the plants, presenting a very low cost, suited for the working in small areas and movable from one place to another, and taking away as little space as possible. Furthermore, said engine being semi-automatic and moving on the ground, said engine, according to the present invention forces the workmen to keep a constant working rhythm, whereby the same work in conditions which are much more comfortable than the conventional work.

The aim os reached realizing a self-moving wag= gon, eventually a track, with a hydrostatic ad= vancement, provided with a plurality of conveyor belts with a variable inclination, said belts being in turn provided, at the end thereof, with seats for the workmen, said waggon being surmounted by a working plane and carrying an elevator so as to perform the loading and unloading of the finished product.

According to the present invention, the carrying structure of the engine consists of a plurality of uprights out of stamped plate, connected at the lower part thereof to the inner sides of the tracks for the support of the horizontal working plane, said working plane being prov= ided with lateral edges which can be opened so

- 3 -

0022427

as to increase the surface of said plane; on the
rear part of said plane a plurality of conveyor
belts are kooked provided, at the end thereof,
with the seats for the workmen. Said belts hav
ing a variable inclination, by means of an oleo
dynamic device, allow to place the workman at
different heights from the ground, thus also al
lowing the comfortable harvest of the leaves.

On the working plane a basin for the collection
of the leaves is provided, facing the upper part
of the conveyor belt; said basin is provided, at
the ends thereof, with a structure suited for
containing the frames carrying the tobacco lea=
ves, which are packed directly on the engine.
Said frames, once prepared, are placed onto a
collecting basket provided on the pront part
of the engine.

Said basket is sliding, by means of a system
provided with a hydraulic jack or ropes, onto
lateral, vertical guides, and may be placed at
different heights allowing the comfortable unload
ing of the tobacco carrying frames contained
therein.

In another embodiment of the present-invention,
the collection basket may be replaced by a con=
tainer, also sliding on guides by means of ro=
pes or a hydraulic jack, and being provided with a level ground which can be downwardly open
ed by means of hydraulic jacks. In said container
the collected tobacco leaves may be placed, ac=
cording to another known way of working.

In the engine according to the present invention
a Diesel motor transmits the motion, by means of
coupling, to the oleodynamic pumps connected with
the hydraulic motors which, being hooked in said
stamped plate uprights, transmit the motion to
the driving wheels by means of chains placed in=
side said uprights.

In another embodiment of the present invention
the motion can be determined by using a hydrau=
lic motor provided with an axial reducer being
directly hooked onto the driving wheel. In a fur
ther embodiment of the engine - not using tracks,
but two or four driving tyres - said hydraulic
motors are instead directly placed onto said
tyres.

The Diesel motor is further provided with an o=
leodynamic pump of the already well known kind,
for all the requested services, being operated
by the driver of the engine.

The conveyor belts placed at the back part of
the engine will be operated by means of a hy =
draulic motor and a mechanic transmission. In this case the motor transmits, by means of a chain, the motion to an axis of a polygonal section, sliding inside upper rolls, transmitting, at the same time, the rotation motion to all of the conveyor belts.

The remarkable dimensions of the engine when working are reduced to a minimum, thus allowing an easy circulation on the streets, by closing the edges of the level ground downwardly and placing said belts in the centre making the same slide onto the upper guide whereon the same are hooked.

In a further embodiment of the present invention said engine is provided instead with a plurality of vertical conveyor belts provided, at the lower end thereof, with seats for the workmen, with only one, centrally placed, vertical conveyor belt, connected, at the lower end thereof, with two horizontal conveyor belts, sliding towards said central, vertical conveyor belt. Said horizontal conveyor belts are placed at at least 1.50 meters from the ground, so that the workmen can cut the upper part of the tobacco plants and put the same onto the conveyor belts, which feed said tobacco leaves to the central, vertical conveyor belt, which in turn feeds the leaves to the upper working plane. In this case the workmen are not sitting, but follow the movement of the engine.

An exemplifying, but not limitative embodiment of the present invention, as well as the de = tails thereof, are shown in the enclosed draw= ings, wherein the figures show:

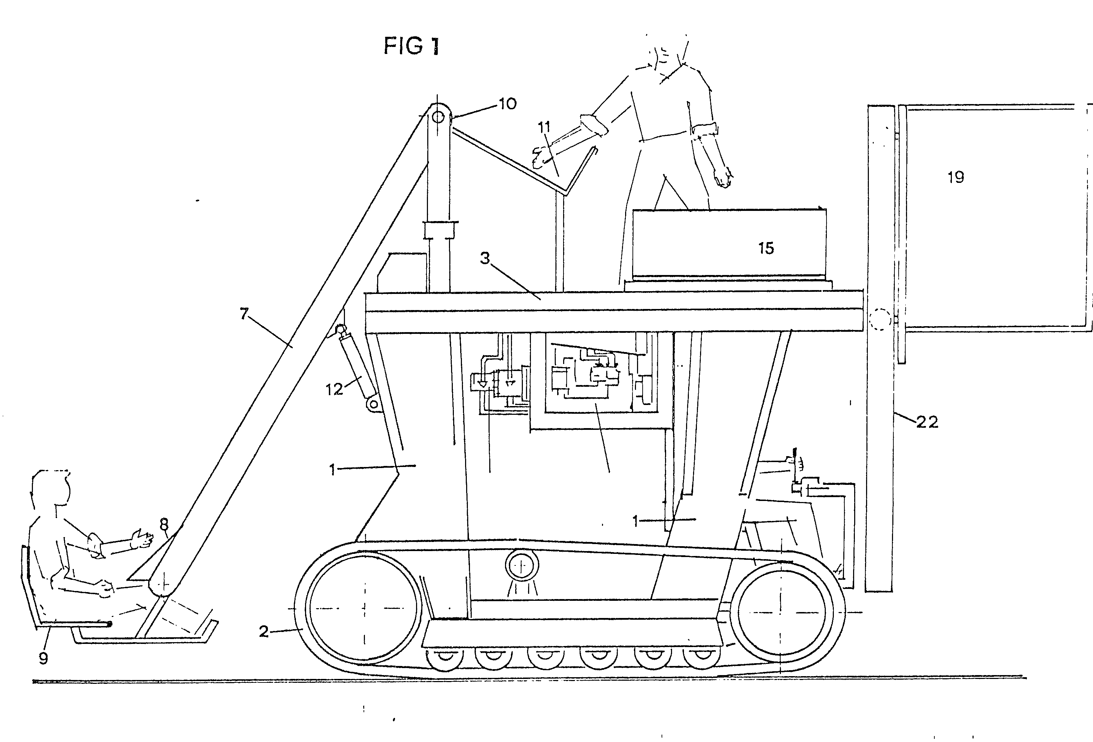

figure 1, a lateral scheme of the whole engi= ne,

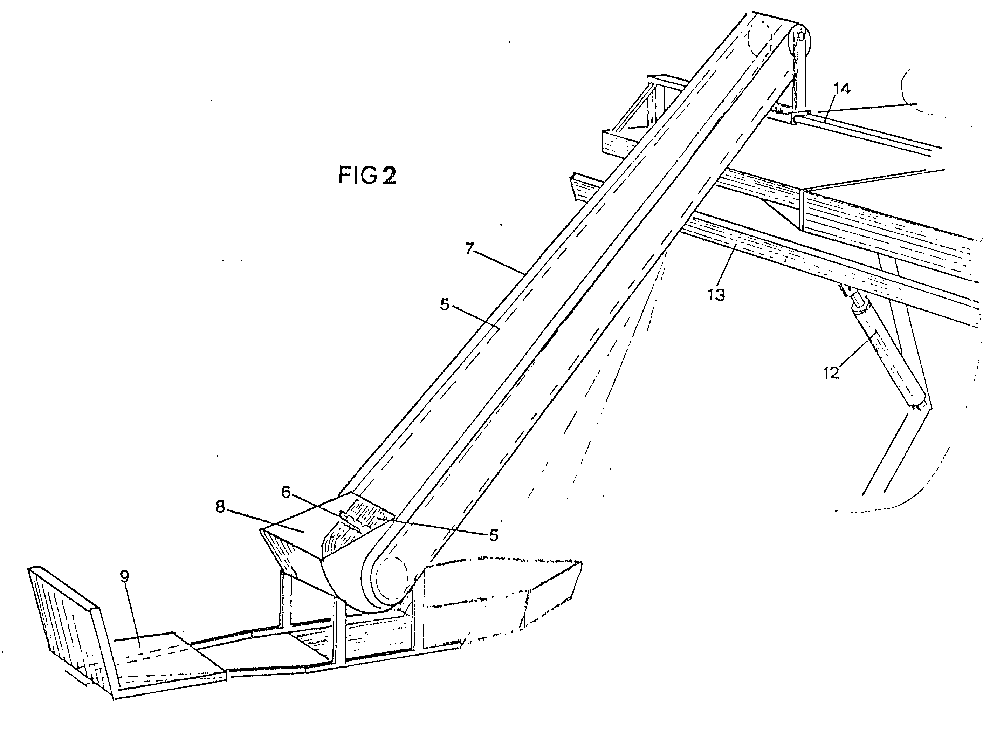

figure 2, an outer, axonometric view of a con= veyor belt provided, at the end thereof, with a seat for the workmen,

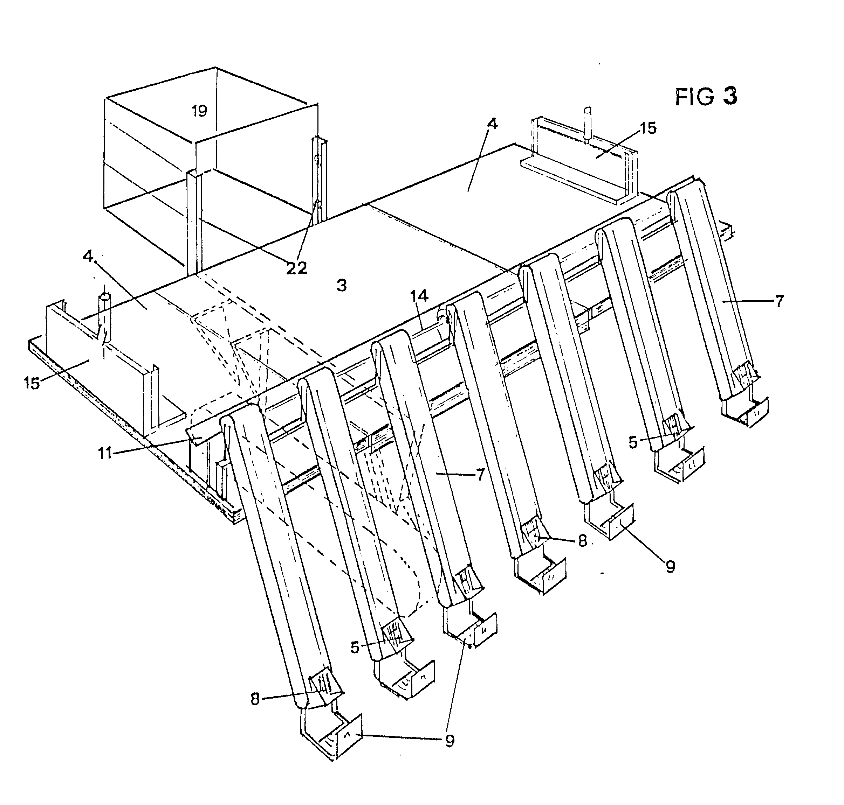

figures 3 and 4, an axonometric view of the en gine with the belts and the level ground, re= spectively in working and transport position, with the minimum waste of space,

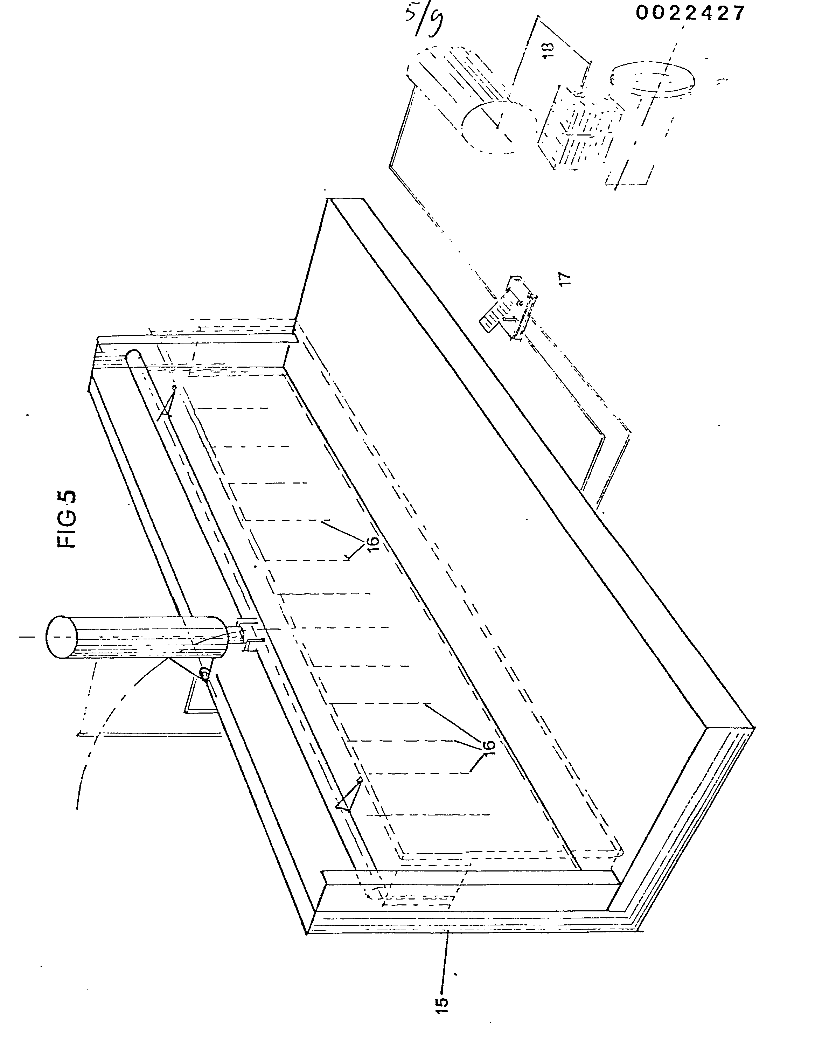

figure 5, an axonometric scheme of the hydrau lic feeding device, for the packaging of the tobacco carrying frames,

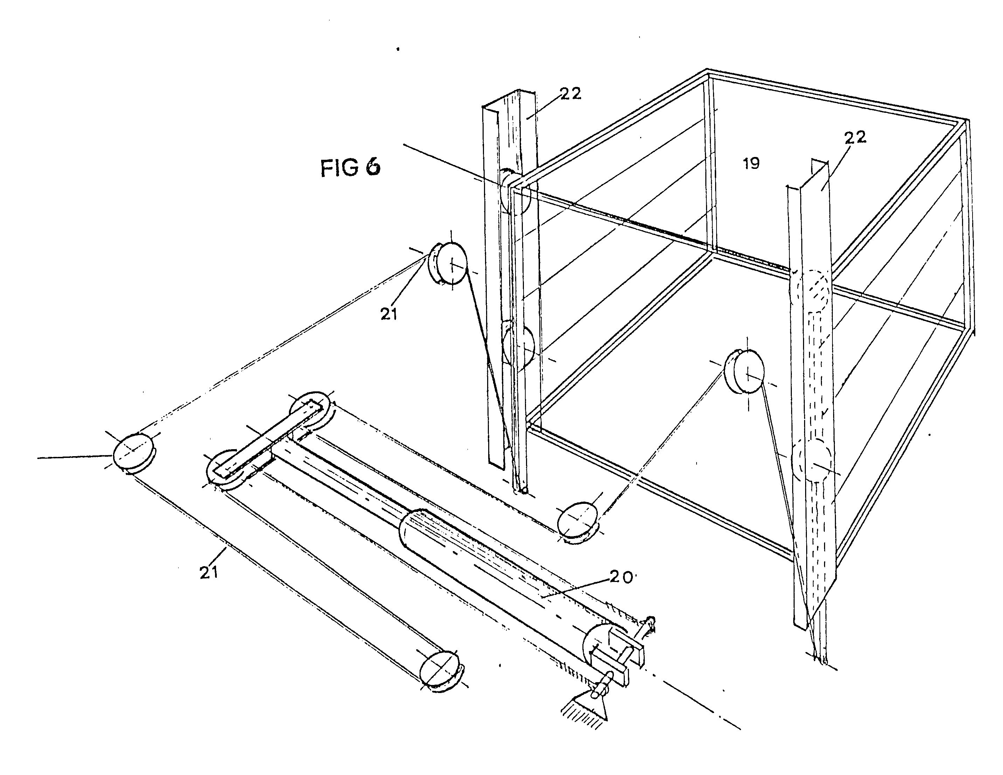

figure 6, a scheme of the driving device of the collection basket of the frames,

figure 7, an axonometric view of the embodi = ment wherein the container can be downwardly opened,

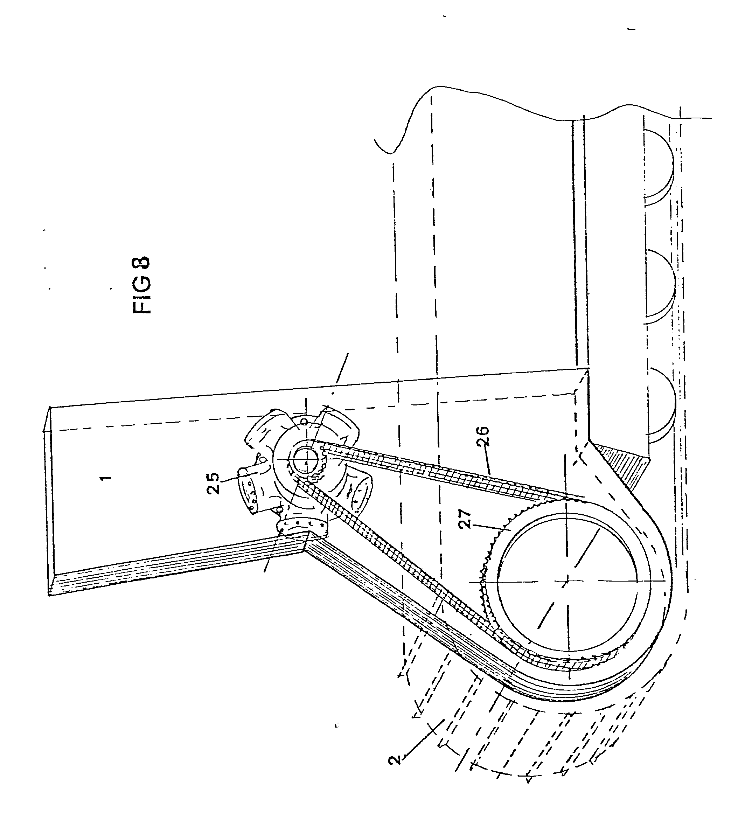

figure 8, the scheme of the transmission of the motion from a hydraulic motor to the driving wheels, in the embodiment with the tracks,

figure 9,   a top view of the engine according to that embodiment in which the engine is provided with only one central, vertical conveyor belt and two lateral, horizontal conveyor belts.

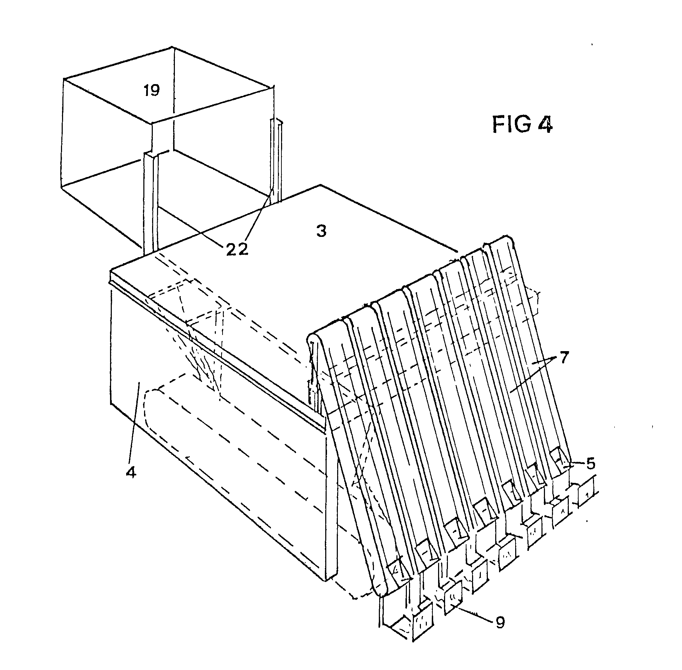

Relating now to the details in the drawings, 1 shows the uprights of the engine, connected to tracks 2 for the support of the working plane 3, provided with lateral edges 4 which can be open= ed; conveyor belts 5, provided with rubber pales 6 or similar, for the traction of the leaves upwardly, are placed in containers 7, out of stamped plate, plastic or similar, provided with a lower opening 8 corresponding to a fix= ed seat 9, for the introduction of the tobacco leaves by the workmen, and with an upper open= ing 10 for the output of said leaves into a collection basin 11. Said belts 5 may be rais= ed at different working heights, by means of oleo dynamic jacks 12 acting onyo a transversal bar 18, and further said belts may slide, after hav= ing removed the relative blocking devices, onto an upper guide 14 so as to be collected, as in figure 4, for the transport.

Furthermore, on edges 4, which can be opened, of working plane 3, structures 15 are placed for the packaging of the frames provided with ends 16 which slide due to the operating, by the workman, of a pedal 17, of a hydrostatic device 18. The

collecting basket 19 is moved along lateral guid= es 22, by means of a hydraulic jack 20 and the rope and pulley system.

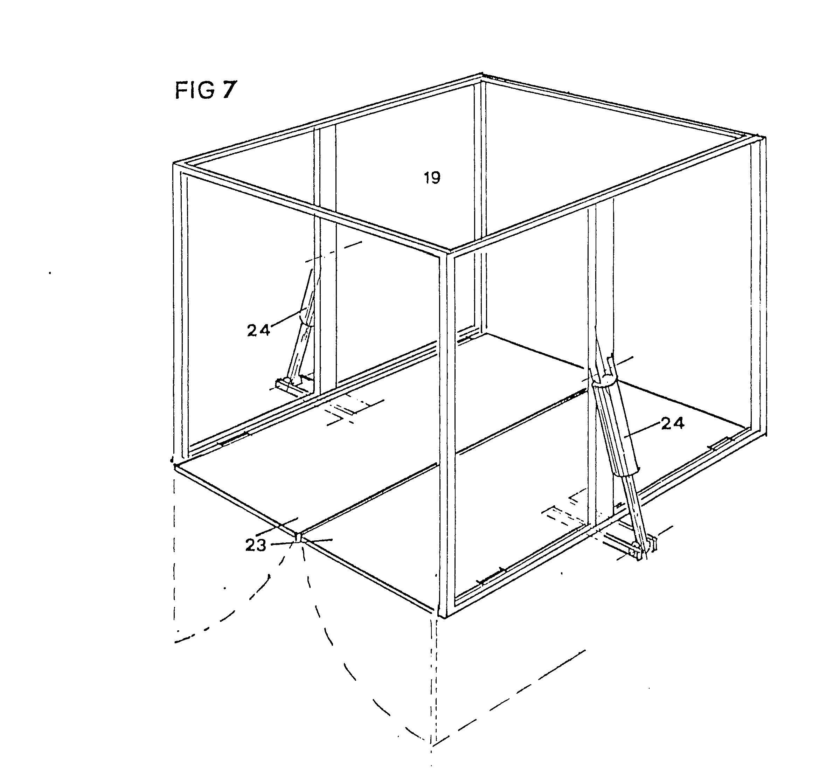

Relating to the embodiment according to figure 7, the basket 19 shows the two sections of the level ground 23 which can be opened downwardly, by means of the hydraulic jacks 24.

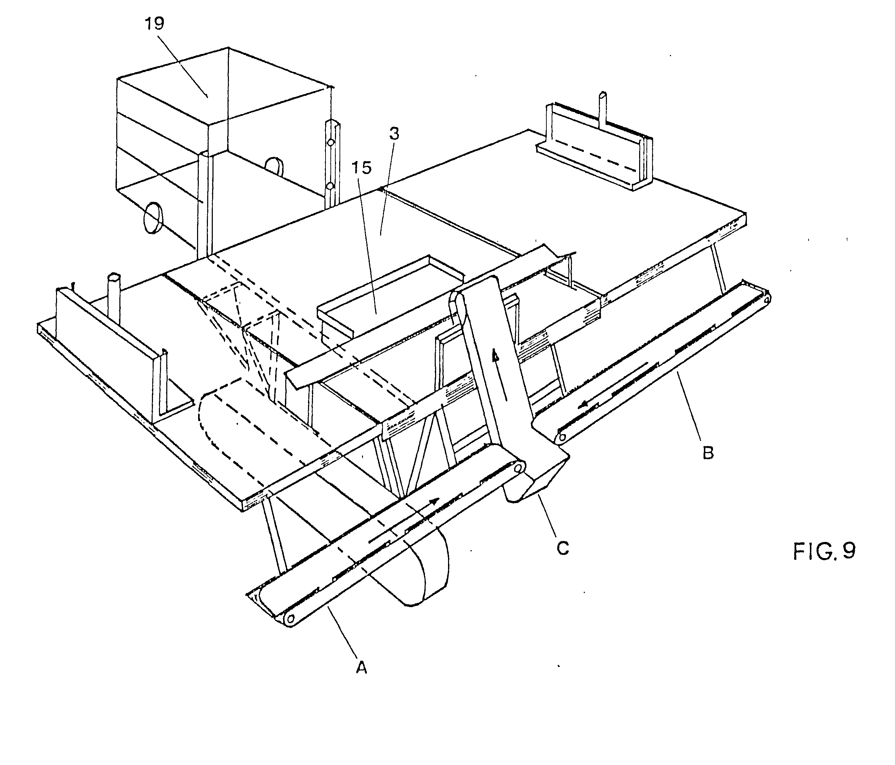

Further relating to the embodiment according to figure 9, A and B show the two horizontal, lateral conveyor belts, while C shows the only, central, vertical conveyor belt.

Finally, the hydraulic motor 25 transmits the motion to wheels 27, by means of a chain 26, for the operating of tracks 2.

The functioning of the engine according to the present invention can be described as follows: the self-moving engine is driven by the pilot, sitting on the front of the same, to the working area, all of the belts 5 being folded, and the lateral edges 4 being downwardly closed, as in figure 4; when starting the harvesting, said belts 5 slide on upper guide 14 and then are blocked according to the distances between the rows of the plants; the edges 4 are raised and opened, so as to increase the surface of the working plane 3; now the workmen sit down in seats 9, on said plane 3; the belts 5 are suc= cessively raised, by means of said jacks 12 and the transversal bar 13, at different working heights. The workmen provide for the harvesting of the tobacco leaves, introducing said leaves in the lower opening 8 of containers 7, so that the belt 5, with the help of pales 6 or similar, lift up said leaves and make the same fall down, through the upper openings 10, into the collec= tion basin 11. At this point, in the two possi= ble embodiments, the workmen who are on plane 3 either place the leaves in layers, tidically, in the structure 15 and successively, by means of pedal 17, end 16 penetrate in the same thus realizing tobacco carrying frames which succes sively are placed in the collecting basket 19, or said leaves are just placed into the basket as it comes, whereby said basket can be opened according to figure 7. Thus, in the two embo= diments, according to the operating of one work man, the unloading is performed, making slide basket 19 along lateral guides 22, by means of the rope and pulley system 21, or just opening sections 23 by means of the hydraulic jacks 24.

According to a further embodiment of the present invention, and to the figure 9, the workmen cut the tobacco leaves and place the same on the lateral conveyor belts A and B, which in turn carry the leaves to the central vertical conveyor belt C and thus to the upper working plane 3.

The harvest being finished, the space of the en
gine will be again reduced for the transport,
performing the opposite operations than the o=
nes described at the beginning:

It is understood that the embodiments and the
construction details can be varied in dimensions,
proportions and disposition, relating to what
has been hereinbefore described and illustrated,
without therefore going out of the limits of the
present invention.

Claims

1. A self-moving engine with hydrostatic advancement for the semi-automatic harvest of tobacco, parti= cularly for what concerns the use thereof on small fields or areas, wherein said engine consists in a self-moving waggon (2), eventually a track, with a hydrostatic advancement, provided with a plurality of conveyor belts (5) with a variable inclination, said belts (5) being in turn provided, at the end thereof, with seats (9) for the workmen, said wag= gon or track (2) being surmounted by a working pla ne (3) and carrying an elevator so as to perform the loading and unloading of the finished product.

2. An engine for the semi-automatic tobacco harvest according to claim 1, wherein the conveyor belts (5), provided with rubber pales (6) or similar, are contained in containers (7), having a lower opening (8), corresponding to a seat (9) fixed the reto, and an upper opening (10) for the output of the leaves into a collection basin (11), said belts (5) being lateron lifted at the correct work ing height by means of oleodynamic jacks (12) acting onto a transversal rod (13), whereby said belts (5) may, furthermore, slide onto an upper guide (14), after having removed the relative blockage means, so as to be folded, for the trans port of said engine.

3. An engine for the semi-automatic harvest of the tobacco according to the precedent claims, wherein the working plane (3) is provided with lateral ed= ges (4) which can be opened and which can also support structures (15) for the packaging of tobacco-carrying frames, said plane being provided with ends (16) which are lowered by means of a pedal (17) for the operating of the hydrostatic device (18).

4. An engine for the semi-automatic harvest of the tobacco according to the precedent claims wherein the collecting basket (19), which by means of a hydraulic jack (20) and the rope and pulley sy= stem (21) is moved along lateral guides (22), for the unloading.

5. An engine for the semi-automatic harvest of the tobacco according the precedent claims 1 to 3, whe= rein the basket for the collection of the tobacco leaves shows a level ground (23) which can be opened downwardly, by means of hydraulic jacks (24), for the unloading.

6. An engine for the semi-automatic harvest of the tobacco according to the precedent claims, wherein a hydraulic motor (25) transmits the motion, by means of chains (26), to wheels (27) for the oper ating of the tracks (2).

7. An engine for the semi-automatic harvest of the tobacco according to the claims 1 to 5, wherein the motion can be determined by applying a hydraulic motor with an axial reducer being directly hooked onto the driving wheel.

8. An engine for the semi-automatic harvest of the tobacco according to the claims 1 to 5 wherein the hydraulic motors are directly placed onto the tyres of a further embodiment consisting in two or four driving wheels.

9. An engine for the semi-automatic harvest of the tobacco according to the precedent claims wherein a Diesel motor, provided with an oleodynamic pump, provides for all the requested services.

10. An engine for the semi-automatic harvest of the tobacco according to claim 1, wherein said engine is provided with two lateral horizontal conveyor belts and with one central vertical conveyor belt, placed at least at 1.50 meters from the ground, whereby the workmen are not sitting at the end of said central, vertical conveyor belt but follow the movement of said engine during the harvest of the tobacco leaves, and whereby said leaves are fed, by the two lateral, horizontal conveyor belts, to the one central vertical conveyor belt and then to the upper working plane.

FIG 1

FIG 2

2/5

0022427

FIG 3

FIG 4

FIG 5

0022427

0022427

FIG 6

19

20

21

22

FIG 7

FIG 8

0022427

FIG. 9

9/9

0022427

European Patent Office

**EUROPEAN SEARCH REPORT**

| DOCUMENTS CONSIDERED TO BE RELEVANT | | | CLASSIFICATION OF THE APPLICATION (Int. Cl.) |
|---|---|---|---|
| Category | Citation of document with indication, where appropriate, of relevant passages | Relevant to claim | |
| | US - A - 3 490 200 (K.C.EBERT et al.) <br> * abstract; fig. 1, 2 * <br> -- | 1,4 | A 01 D 45/16 |
| | CA - A - 911 742 (BALTHES FARM EQUIPMENT) <br> * page 5, lines 12 to 24; fig. 1, 2, 9, 11 * <br> -- | 1 | |
| | US - A - 3 215 288 (W.R. LONG et al.) <br> * column 1, lines 38 to 49; fig. 1 * <br> -- | 1 | TECHNICAL FIELDS SEARCHED (Int.Cl.) |
| | US - A - 3 107 018 (W.A. MISH, JR.) <br> * column 1, lines 25 to 38; fig. 1 * <br> -- | 1 | A 01 D 45/16 |
| | US - A - 3 664 526 (K.S. DILDAY) <br> * abstract; fig. 1, 5 * <br> -- | 1 | |
| A | DE - A - 2 222 392 (F. METZ) <br> * fig. 1 * <br> -- | 10 | |
| P,A | US - A - 4 176 510 (H. GRINER et al.) <br> * abstract * <br> ---- | | CATEGORY OF CITED DOCUMENTS <br> X: particularly relevant <br> A: technological background <br> O: non-written disclosure <br> P: intermediate document <br> T: theory or principle underlying the invention <br> E: conflicting application <br> D: document cited in the application <br> L: citation for other reasons <br> &: member of the same patent family, corresponding document |

X The present search report has been drawn up for all claims

| Place of search | Date of completion of the search | Examiner |
|---|---|---|
| Berlin | 02-09-1980 | SCHOFER |

EPO Form 1503.1   06.78